# EUROPEAN PATENT SPECIFICATION

(11) **EP 3 533 257 B1**
(45) Date of publication and mention of the grant of the patent: **29.07.2020**
(21) Application number: 16920070.6
(22) Date of filing: 27.10.2016
(51) Int. Cl.: H04W 36/00, H04W 74/08

(54) **NEIGHBOR RELATION ESTABLISHMENT IN WIRELESS COMMUNICATIONS NETWORKS**
NACHBARBEZIEHUNGSAUFBAU IN DRAHTLOSKOMMUNIKATIONSNETZWERKEN
ÉTABLISSEMENT DE RELATIONS DE VOISINAGE DANS DES RÉSEAUX DE COMMUNICATION SANS FIL

(43) Date of publication of application: 04.09.2019
(73) Proprietor: Telefonaktiebolaget LM Ericsson (publ), 164 83 Stockholm (SE)
(72) Inventor: GUNNARSSON, Fredrik, 58750 Linköping (SE); RAMACHANDRA, Pradeepa, SE-583 32 Linköping (SE); AXÉN, Rasmus, 583 36 Linköping (SE); WALLDEEN, Thomas, 587 31 Linköping (SE); KARLSSON, Patrik, 191 33 Sollentuna (SE); ÖSTBERG, Christer, 245 44 Staffanstorp (SE); AXELSSON, Håkan, 582 46 Linköping (SE); RONKAINEN, Henrik, 247 33 Södra Sandby (SE); MÜLLER, Walter, 194 62 Upplands Väsby (SE); AMIRIJOO, Mehdi, SE-583 36 Linköping (SE)
(74) Representative: Zacco Sweden AB
(86) International application number: PCT/SE2016/051043
(87) International publication number: WO 2018/080357

(56) References cited:
- EP-A1- 2 487 952
- WO-A1-2014/011091
- WO-A1-2015/122812
- WO-A1-2015/150020
- WO-A1-2016/055102
- WO-A1-2016/122232
- US-A1- 2008 002 628
- US-A1- 2016 007 268
- ERICSSON ET AL: "Method for ANR support in UTRAN", 3GPP DRAFT; R2-106442 METHOD FOR ANR SUPPORT IN UTRAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050467150,

## Description

### TECHNICAL FIELD

The techniques and apparatus disclosed herein relate generally to wireless communications networks, and relate more particularly to the establishment of neighbor relations in such networks, where new neighbor relations are established based on forced accesses to unknown nodes.

### BACKGROUND

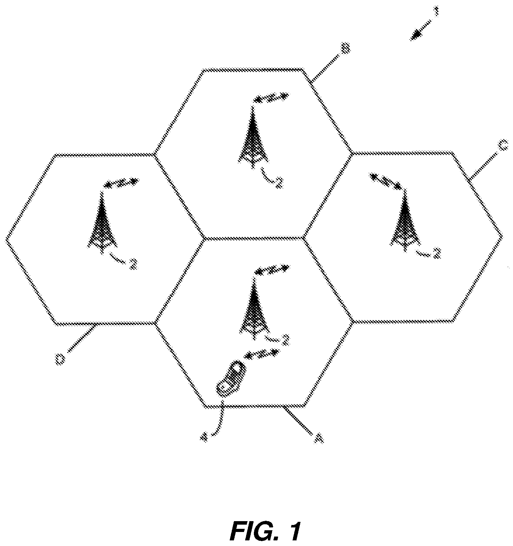

Figure 1 of the accompanying drawings illustrates a simple wireless telecommunications network, which includes several communication cells A, B, C, and D, each of which is served by a radio base station 2. Each communication cell covers a geographical area, and by combining a number of cells a wide area can be covered by the system. A mobile terminal 4 is illustrated communicating in cell A, and is able to move around the system 1.

A base station 2 contains a number of receivers and transmitters to give radio coverage for one or more cells. Each base station 2 is connected to network "backbone", or core network infrastructure (not shown), which enables communications between base stations and other networks. The example system of Figure 1 shows one base station per cell.

An important concept in such a network is the cell and its neighbors. During a call, for example, a mobile terminal 4 typically moves around among the cells; moving from one cell to one of its neighbors, repeatedly. A list of the known neighbors, the so-called "neighbor cell set", is important for the network 1 to enable reliable handover between cells of a mobile terminal 4. The network 1 can store information relating to a neighbor set, typically for each cell. The information can further be modified to be suitable for each mobile terminal, e.g., to adapt to mobile terminal measurement capabilities. The neighbor set is used for evaluation and handover of a mobile terminal from one cell to another as the mobile terminal crosses a cell boundary. It will be readily appreciated that even in simple wireless communications networks the cell boundaries are not sharply defined, but will in practice be somewhat blurred as the range of the base stations will overlap with one another.

In existing systems, the mobile terminal 4 detects cell operating parameters for neighboring cells. The measured operating parameters in a Wideband Code-Division Multiple Access (WCDMA) system, for example, are typically the scramble code (an encoding code which is non-uniquely assigned to the cell), a signal strength, a signal quality, and timing information. The mobile terminal measures the operating parameters of each neighbor cell (Ncell) and reports one or more of these parameters back to the network 1. When the quality of a neighbor cell is considered better than the current serving cell, a handover from the serving cell to the chosen neighbor cell may be triggered by the network, such that the neighbor cell then becomes the serving cell for the mobile terminal.

It will be apparent that it is necessary in such systems to provide a mechanism for identifying each cell. In fact, each cell can typically be identified in more than one way. For example, each cell has an identity that is unique within its own "domain", that is, the part of the system using the same network backbone. This identity may be unique within the mobile network operator's network, and may even be unique amongst all networks worldwide. Such an identity is referred to herein as a unique cell identity. This unique cell identity may also be referred to as the Cell Global Identity (CGI).

In addition, a cell can also be identified on the basis of a non-unique cell identity that may be reused within the network, but may for example nevertheless be useful because it can be retrieved easily from the cell in question. For example, in the case of a WCDMA (wideband code division multiple access) system, the scrambling code may be a useful non-unique cell identity. In the case of a GSM system, a combination of the frequency and the base station identity code (BSIC) may be used as a non-unique cell identity. The non-unique cell identity is also referred to herein as the cell-id.

Typically, in a WCDMA (wideband code division multiple access) system, the mobile terminal detects synchronization channel transmissions from surrounding cells, in order to determine identifier (scramble code) and timing information. Pilot signals can then be detected to determine signal strength and quality measurement. The mobile terminal 4 would then only report cells which have measurements above predetermined threshold levels. Similarly, in a Long-Term Evolution (LTE) wireless system, the mobile terminal detects two synchronization signals, the Primary Synchronization Signal (PSS) and the Secondary Synchronization Signal (SSS), for each surrounding cell, to determine the cell identifier, which is referred to as a physical cell identifier (PCI), and to determine timing information for the signal. Reference signals from the neighbor cells are measured and, if the measurements fulfill pre-configured conditions, the measurements are reported to the network.

In either case, and in other wireless networks, when the mobile terminal 4 reports the neighbor cell signal quality measurements to the network, the cells' respective identities become important. In both WCDMA and LTE systems, cell identities used at the physical layer are reused for more than one cell, when the entire network is considered. The network node receiving the measurement report, e.g., the eNodeB (or eNB) in an LTE system, needs to be able to map the cell identity associated with the cell measurement to a global identifier, and generally needs to be aware of the identities of the cells in the vicinity of the cell or cells served by the network node. This information can be generally referred to as "neighbor relations" or "neighbor cell relations," and in an LTE eNodeB, for example, comprises, for each cell served by the eNodeB, a table, which may be referred to as a "neighbor relation table," this table containing a global cell identifier and a physical cell identifier for each known neighbor to the served cell.

LTE networks may support Automatic Neighbor Relations (ANR) functionality, which provides for the automatic updating of the neighbor relation table. When a mobile terminal, referred to as a user equipment or "UE" in LTE documentation, discovers a new cell's E-CGI, which may be obtained from the system information broadcast in that cell, it reports the detected E-CGI to the serving eNB, which then can update the neighbor relation table with the newly discovered neighbor. An eNB can also configure a UE to perform measurements and detect cells on other RATS and/or other frequencies. The UE reports the physical cell identities of detected cells in those RATS and/or other frequencies - the eNB may then instruct the UE to read the global cell identifiers and other parameters for one or more of those detected cells, for updating its neighbor relation table.

In the development of technical solutions for so-called 5^{th}-generation wireless networks, one design principle under consideration is the concept of an ultra-lean design, where "always-on" signals transmitted by the network are minimized. The expected benefit from this design principle is expected to be significantly lower network energy consumption, better scalability, higher degree of forward compatibility during the RAT evolution phase, lower interference from system overhead signals and consequently higher throughput in low load scenario, and improved support for user centric beam-forming.

Further, advanced antenna systems (AAS) are expected to play a key role in these emerging wireless networks, since AAS technology has advanced significantly in recent years and a rapid technology development in the years to come is foreseen. Hence it is natural to assume that advanced antenna systems in general and massive multiple-input multiple-output (MIMO) transmission and reception in particular will be cornerstones of future wireless systems. One implication of this is a possible shift from a cell-centric view of network planning and mobility to a beam-centric view, where a given radio access point may support many dynamically-managed beams.

One implication arising from these likely developments in 5^{th}-generation networks is that, in deployments with large antenna arrays and many possible candidate beam configurations, all beams cannot transmit reference and measurement signals in an always-on, static manner for the sake of mobility measurements. Instead, the connected access nodes will select a relevant set of mobility beams to transmit, only when required. Each mobility beam may carry a unique Mobility Reference signal (MRS). The UE can then be instructed to measure on each MRS and report to the system. Based on some criteria, such as the difference in MRS strength between two mobility beams, a handover can be triggered. For mobility to work efficiently, however, the involved access nodes (ANs) need to maintain beam neighbor lists, exchange beam information, and coordinate MRS usage. The use of the ultra-lean design principle, coupled with the dynamic use of mobility beams, will present new challenges for ANR in these 5^{th}-generation networks.

Ericsson et al., "Method for ANR support in UTRAN", published in 3GPP Mobile Competence Centre, on November 9, 2010, describes methods for ANR support in UTRAN and provides detailed assumption on a logging method that is based on cell re-selection.

WO 2014/011091 A1 describes a respective method in a user equipment and in a target base station serving a target cell for the user equipment for supporting update of neighbor cell relations in a cellular communications network.

### SUMMARY

The invention is defined by the independent claims. Furthermore, the embodiments of the invention are those defined by the claims. Moreover, examples, embodiments and descriptions, which are not covered by the claims are presented not as embodiments of the invention, but as background art or examples useful for understanding the invention.

The LTE solution for establishing neighbor base station relation establishment is based on the always-on reference signals in LTE, as well as the routine broadcasting, in system information, of unique cell identifiers (referred to as Cell Global ID). But this always-on signaling and the transmission of unique cell identifiers may be absent in next-generation wireless networks by design. This means that a new approach to neighbor relations is needed.

In some embodiments of the techniques and apparatus described herein, a first node (e.g., a serving access node) receives a UE report containing a mobility reference signal (MRS) sent by a second node, where the second node is unknown to the first node. In other words, the first node does not possess an association between the MRS and a unique node identifier. In this situation, the first node may force the UE to establish connection with the unknown second node. This may be done, for example, by configuring the UE so that it does not establish a connection with any node that is already known to the first node, i.e., any node for which the first node already possesses a neighbor relation. More particularly, this may be done by configuring the UE with a list of node identities that may be encountered during random access but that should not be accessed, such that the UE is thereby forced to access a node that is not in the list. Once connected to this second node, the UE will report, to the second node, a unique identifier of the first node. The second node is then able to contact the first node to set up a neighbor relation with the first node, which in turn allows the first node to set up a neighbor relation with the second node.

Embodiments of the presently disclosed techniques include, for example, a method, in a wireless device (e.g., a UE) operating in a wireless communication network, where the method comprises receiving, from a first node in the wireless communication network, a blacklist comprising one or more random access response identifiers. The method further includes transmitting a random access preamble, to initiate random access to another node in the wireless communication network, and receiving a random access response, in response to the transmitted random access preamble. The method still further includes comparing a random access response identifier included in the received random access response to the one or more random access response identifiers in the blacklist, and establishing a connection to a second node in the wireless communication network, where the second node corresponds to the received random access response, responsive to determining that the random access response identifier included in the received random access response is not included in the blacklist. Finally, the method includes sending, to the second node, an identifier for the first node or an identifier for a beam transmitted by the first node, or both.

In some embodiments, this example method further comprises reporting one or more indications of received mobility reference signals to the first node, prior to said transmitting the random access preamble. In these embodiments, transmitting the random access preamble may be responsive to receiving, subsequent to said reporting, a request to perform random access. In some of these embodiments, the one or more indications of received mobility reference signals each comprise a sequence identifier for the respective mobility reference signal or an indicator of time-frequency resources occupied by the respective mobility reference signal, or both.

In some instances, a wireless device implementing the methods summarized above may receive a plurality of random access responses in response to the transmitted random access preamble, where at least two of the random access responses comprise respective random access response identifiers that are not included in the blacklist. In some embodiments, the method in these instances may include establishing the connection to a node corresponding to a first one of the at least two random access responses comprising random access response identifiers that are not included in the blacklist, and sending, to the second node, an indication of the random access response identifier for at least a second one of the at least two random access responses comprising random access response identifiers that are not included in the blacklist.

Other embodiments of the presently disclosed techniques include a method implemented in a first node of a wireless communication network, where the method includes receiving, from a wireless device served by the first node, one or more indications of received mobility reference signals. This example method further includes determining that a particular one of the one or more indications corresponds to a mobility reference signal associated with a node or beam that is unknown to the first node, and sending, to the wireless device, a blacklist comprising one or more random access response identifiers. The method further includes sending, to the wireless device, a request to perform random access, in response to said determining. The method still further includes receiving, from a second node of the wireless communication network, after sending the request to perform random access, neighbor relation information for the second node and/or for a beam transmitted by the second node, where the second node and/or the beam is associated with the mobility reference signal corresponding to the particular one of the one or more indications.

In some embodiments, this example method further comprises updating a neighbor list, using the received neighbor relation information. In some embodiments, the random access response identifiers each correspond to a respective node of the wireless communication network. In some, the random access response identifiers each correspond to a respective beam transmitted by another node of the wireless communication network.

In some embodiments of these methods performed by the first node, the method further comprises, prior to the determining step referred to above, and prior to sending the blacklist to the wireless device, requesting random access response identifiers from each of one or more known neighbor nodes in the wireless communication network. In these embodiments, the determining step is based on random access response identifiers received in response to said requesting. In some of these and in other embodiments, the method further includes, prior to receiving the one or more indications of received mobility reference signals, requesting each of one or more known neighbor nodes to transmit respective mobility reference signals.

Still other embodiments of the presently disclosed techniques include an example method performed in a second node of a wireless communication network, where the method includes receiving, from a wireless device in the wireless communication network, a random access preamble, and transmitting a random access response in response, the random access response comprising a random access response identifier. This example method further includes receiving a connection request from the wireless device, in response to transmitting the random access response, and establishing a connection to the wireless device. The method still further comprises receiving, from the wireless device, an identifier for a first node or an identifier for a beam transmitted by the first node, or both, and then sending, to the first node, neighbor relation information for the second node and/or for a beam transmitted by the second node.

In some embodiments of this method performed in the second node, the method further includes receiving, from the wireless device, a random access identifier corresponding to a third node and/or to a beam transmitted by the third node, and sending, to the first node, the random access identifier corresponding to the third node and/or to the beam transmitted by the third node.

Also disclosed herein are apparatuses and systems corresponding to the above-summarized methods. For example, in some embodiments, a wireless device configured to operate in a wireless communication network includes a transceiver circuit configured to communicate with one or more nodes operating in the wireless communication network and a processing circuit operatively associated with the transceiver circuit. The processing circuit is configured to receive, from a first node in the wireless communication network, a blacklist comprising one or more random access response identifiers and transmit a random access preamble, to initiate random access to another node in the wireless communication network. The processing circuit is configured to receive a random access response, in response to the transmitted random access preamble and compare a random access response identifier included in the received random access response to the one or more random access response identifiers in the blacklist. The processing circuit is also configured to establish a connection to a second node in the wireless communication network, where the second node corresponds to the received random access response, responsive to determining that the random access response identifier included in the received random access response is not included in the blacklist. The processing circuit is configured to send, to the second node, an identifier for the first node or an identifier for a beam transmitted by the first node, or both.

In some embodiments, a first node configured to operate in a wireless communication network includes a transceiver circuit configured to communicate with a wireless device operating in the wireless communication network and served by the first node and a processing circuit operatively associated with the transceiver circuit. The processing circuit is configured to receive, from the wireless device served by the first node, one or more indications of received mobility reference signals and determine that one of the one or more indications corresponds to a mobility reference signal associated with a node or beam that is unknown to the first node. The processing circuit is also configured to send, to the wireless device, a blacklist comprising one or more random access response identifiers and send, to the wireless device, a request to perform random access, in response to said determining. The processing circuit is configured to receive, from a second node of the wireless communication network, after sending the request to perform random access, neighbor relation information for the second node and/or for a beam transmitted by the second node, where the second node and/or the beam is associated with the mobility reference signal corresponding to said one of the one or more indications.

In some embodiments, a second node configured to operate in a wireless communication network includes a transceiver circuit configured to communicate with a wireless device operating in the wireless communication network and a processing circuit operatively associated with the transceiver circuit. The processing circuit is configured to receive, from the wireless device, a random access preamble and transmit a random access response in response to said receiving, the random access response comprising a random access response identifier. The processing circuit is also configured to receive a connection request from the wireless device, in response to transmitting the random access response, and establish a connection to the wireless device. The processing circuit is configured to receive, from the wireless device, an identifier for a first node or an identifier for a beam transmitted by the first node, or both, and send, to the first node, neighbor relation information for the second node and/or for a beam transmitted by the second node.

### BRIEF DESCRIPTION OF THE FIGURES

Figure 1 illustrates a cellular wireless telecommunications network.
Figure 2 illustrates an example random access procedure, for the case of initial access.
Figure 3 is a process flow diagram illustrating an example method implemented by a wireless device, according to some embodiments of the present invention.
Figure 4 is a signal flow diagram illustrating an example procedure for establishing neighbor relations, according to some embodiments.
Figure 5 is a block diagram illustrating a node, according to some embodiments.
Figure 6 is a process flow diagram showing an example method performed by a first node, according to some embodiments.
Figure 7 is a process flow diagram showing an example method performed by a second node, according to some embodiments.
Figure 8 is a block diagram illustrating a wireless device, according to some embodiments.
Figure 9 is a process flow diagram showing an example method performed by a wireless device, according to some embodiments.
Figure 10 is a block diagram of a functional implementation of a first node, according to some embodiments.
Figure 11 is a block diagram of a functional implementation of a second node, according to some embodiments.
Figure 12 is a block diagram of a functional implementation of a wireless device, according to some embodiments.

### DETAILED DESCRIPTION

As noted above, future wireless networks are expected to take advantage of advanced antenna systems (AAS) to perform dynamic beamforming, and are also expected to employ an ultra-lean design approach, where "always-on" signals are minimized. Further, mobility and coverage planning in such networks may be beam-centric, rather than cell-centric, such that identifiers for individual beams (many of which may be supported by a given access node) are more relevant than node identifiers or cell identifiers.

In network deployments using large antenna arrays and many possible candidate beam configurations, all beams cannot transmit reference and measurement signals in an always-on, static manner, for the sake of mobility measurements. Instead, the connected access nodes may instead select relevant set of mobility beams to transmit, and transmit these mobility beams when required. Each mobility beam may carry a unique Mobility Reference signal (MRS) in these systems. The UE may then be instructed to measure on each MRS, for example, and report measurement results to the system. Based on some criteria, such as a difference in MRS strength between two mobility beams, a handover can be triggered.

For mobility to work efficiently, however, the involved access nodes need to maintain beam neighbor lists, exchange beam information, and coordinate MRS usage. In order for smooth operations of the mobility procedures in next-generation wireless networks, each access node needs to have a concrete list of neighboring nodes and/or neighboring beams that can be handover candidates for the UEs.

Despite advanced radio network planning tools, it is very difficult to predict radio propagation in detail. As a consequence, it is difficult to predict, prior to the network deployment, which base stations or access nodes need to have relations with one another, and which thus may also require a direct connection. This was addressed in LTE, where UEs could be requested to retrieve unique information from the system information broadcast of unknown base stations and report to the serving base station. Such information was used to convey messages to the unknown base station via the core network, which maintained a lookup table from a unique identifier to an established S1 connection. One such message was used to request transport network layer address information necessary for a direct base-station-to-base-station connection for the X2 interface.

In LTE systems, the solution for establishing neighbor base station relation establishment is based on the always-on reference signals in LTE, as well as on the routine broadcasting, in system information, of unique cell identifiers (referred to as Cell Global ID). But this always-on signaling and the transmission of unique cell identifiers may be absent in next-generation wireless networks by design. This means that a new approach to neighbor relations is needed.

Various techniques and apparatuses to address these problems are described in detail below. In some embodiments of these techniques and apparatuses, a first node (e.g., a serving access node) receives a UE report containing a (blindly decoded) mobility reference signal (MRS) sent by a second node, where the second node is unknown to the first node. In other words, the first node does not possess an association between the MRS and a unique node identifier. In this situation, the first node may force the UE to establish connection with the unknown second node. This may be done, for example, by configuring the UE so that it does not establish a connection with any node that is already known to the first node, i.e., any node for which the first node already possesses a neighbor relation. More particularly, this may be done by configuring the UE with a list of node identities that may be encountered during random access but that should not be accessed, such that the UE is thereby forced to access a node that is not in the list. Once connected to this second node, the UE will report, to the second node, a unique identifier of the first node. The second node is then able to contact the first node to set up a neighbor relation with the first node, which in turn allows the first node to set up a neighbor relation with the second node.

It will be appreciated that these techniques and apparatuses are especially applicable to recent technology trends that are of particular interest in a 5G context. These techniques are, however, also applicable in further development of the existing mobile broadband systems such as WCDMA and LTE.

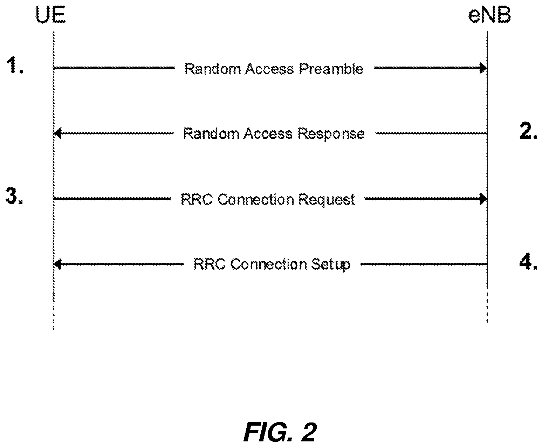

The technique summarized above is based on the use of a random access procedure to establish a new connection between a wireless device and an access node that is unknown to a node that was previously serving the wireless device. Figure 2 illustrates a random access procedure for initial access in a wireless communication system, such as an LTE system. It will be appreciated that a procedure similar to the one illustrated in Figure 2 may be used in conjunction with the techniques disclosed herein, whether in a future version of an LTE network or in an entirely new wireless network. It should be further appreciated that the precise terminology associated with any such random access procedure may vary from one network to another.

As seen in Figure 2, Step 1 of the illustrated random access procedure consists of the transmission by a wireless device (e.g., a UE), of a random access preamble. This allows the receiving node to estimate the transmission timing of the UE, for subsequent adjustments of the UE's transmit timing by the network. Uplink synchronization is necessary, as the UE otherwise cannot transmit any uplink data.

Step 2 of the procedure in Figure 2 consists of the network (i.e., the eNB) transmitting a random access response message. This response includes a timing advance command to correct the uplink timing, based on the timing of arrival measurement in the first step. In addition to establishing uplink synchronization, the second step also assigns an uplink grant, a temporary identifier to the UE, and a temporary identifier of the node (the eNB), to be used in the third step in the random access procedure. Note that in next-generation wireless networks, it might often be the case that several nodes may reply to the random access preambles sent by the UE in step 1.

Step 3 of the procedure shown in Figure 2 consists of signaling from the UE to the network in order to set up a connection. In LTE documentation and in documentation for other systems standardized by the 3^{rd}-Generation Partnership Project, this is performed at a protocol layer referred to as Radio Resource Control, or RRC. Step 3 is thus labeled as an "RRC Connection Request." A primary function of this message is to uniquely identify the UE. The exact content of this signaling depends on the state of the UE, e.g., whether it is previously known to the network or not.

Step 4 of the process shown in Figure 2, the final phase, is responsible for contention resolution in the event that multiple UEs tried to access the system on the same grant, i.e., in the same uplink time-frequency resources. The details of this content resolution process (which may vary from one network type to another) are not important to an understanding of the presently disclosed techniques for facilitating automatic neighbor relations.

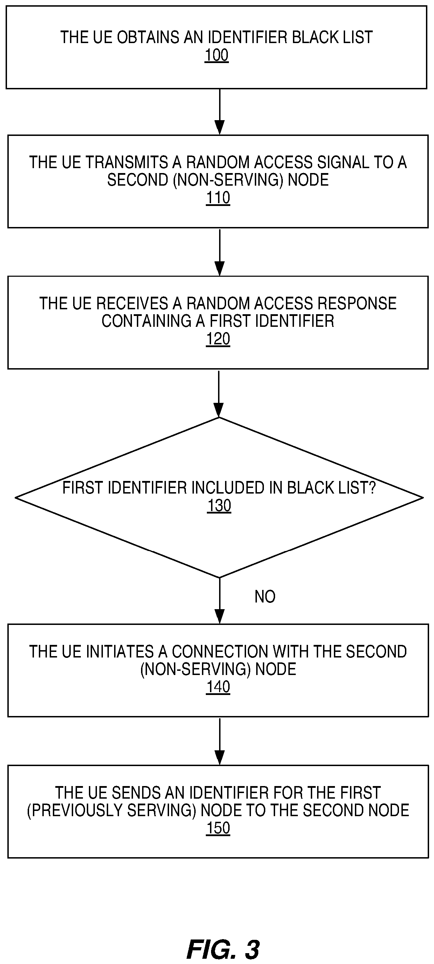

Figure 3 illustrates the basic steps of a general procedure for facilitating the establishment of neighbor relations, according to the presently disclosed techniques, from the perspective of a wireless device, or UE. Note that these terms, "wireless device" and "UE," are used interchangeably herein, to refer generally to access terminals configured to operate in a wireless communications network. A wireless device may be a mobile telephone, a smartphone, or other consumer-oriented device, for example, or it may be a wireless terminal embedded in a portable computer, or installed in an automobile or other vehicle. Likewise, a wireless device may be a machine-to-machine (M2M) device for industrial applications or for enabling the Internet of Things (loT).

Referring again to Figure 3, the first step of the illustrated procedure comprises the receiving, by the wireless device or UE, of an identifier black list, which comprises a list of cell or beam identities. This is shown at block 100. This may be sent to the wireless device by a node serving the wireless device, e.g., in response to receiving, from the wireless device (or another wireless device), a measurement report that includes a physical cell identifier or beam identifier corresponding to a node that is unknown to the serving node, in that it is unable to associate the physical cell identifier or beam identifier with a unique node identifier.

The second step of the illustrated procedure, as shown at block 110, comprises the transmitting, by the wireless device or UE, of a random access signal, e.g., a random access preamble. The purpose of this random access signal is to gain access to the system via a second node, i.e., a node other than the first node, which was previously serving the wireless device. More particularly, the purpose of this random access signal is to gain access to the system through the node corresponding to the physical cell identifier or beam identifier that was unknown to the previously serving node. Thus, this random access signal transmission may be triggered, in some embodiments, by a message from the first node instructing the wireless device to initiate the random access procedure, where this instruction was in turn triggered by the first node's receipt of a measurement report corresponding to an unknown node.

As shown at block 120, the procedure illustrated in Figure 3 continues with the receiving, by the wireless device or UE, of a random access response containing a first identifier, where the identifier is a cell identifier or a beam identifier. As shown at block 130, the method continues with the comparing of this identifier to the previously obtained black list, to determine whether the identifier is included in the black list. If not, as shown at block 140, the wireless device initiates a connection with the node corresponding to the random access response. Note that the steps shown in blocks 110, 120, and 140 correspond to a random access procedure, which may look like the random access procedure shown in Figure 2, for example.

Referring back to Figure 3, after initiating the connection with the second node, the wireless device then sends, to the second node, an identifier corresponding to the first node, i.e., the node that was previously serving the wireless device. This may be a unique identifier for the node itself, for example, or it may be an identifier for a mobility beam for the node, or it may be both. This is shown at block 150. It will be appreciated that since the black list obtained by the wireless device contains identifiers for neighbor nodes that are known to the first (previously serving) node, the second node will be a neighbor node that is not known to the first node. The second node may be the unknown node corresponding to a measurement report previously sent to the first node, but may be another unknown node, in some instances. In either case, the second node can use the identifier(s) corresponding to the first node, as forwarded to it by the wireless device, to initiate contact with the first node, for the purpose of establishing mutual neighbor relations. This is not shown in Figure 3, as this step is transparent to the wireless device. More details of this process are provided below.

It may be noted that Figure 3 does not illustrate the action taken if the only random access response received by the wireless device is included in the black list. For the purposes of the present technique, it does not matter. In some embodiments, the wireless device may be configured to access that second node anyway, in which case it need not send an identifier of the first node. In other embodiments, the wireless device may be configured to ignore the random access response and remain connected to the first node.

It will also be appreciated that the wireless device may receive several random access responses, where two (or more) include different identifiers that are each absent from the black list. In some embodiments, the wireless device may be configured to select one of these responses, based on any criteria, and initiate a connection with the corresponding node. In some embodiments, the wireless device may be configured to send, to the second node, an indicator of the other one (or more) of the received identifiers that were not on the black list. If this identifier is unknown to the second node, it may then wish to trigger the process again, after sending its own black list to the wireless device, so that neighbor relations for this further unknown neighbor may be established. If this identifier is known to the second node, on the other hand, it may forward information regarding this identifier and its corresponding node to the first node, for the updating of its neighbor relations.

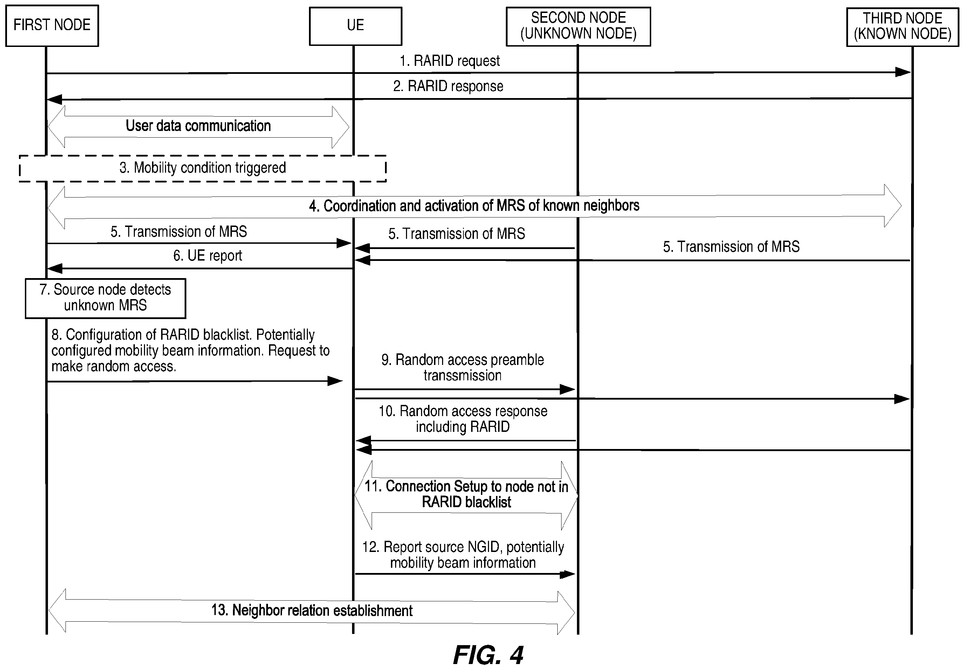

Figure 4 is a signal flow diagram illustrating an example procedure for establishing neighbor relations according to the presently disclosed techniques. In the following explanation of this procedure, the following terminology will be used. The "first node" is the node that is serving the UE initially. This may be an access node, for example, which may alternately be referred to as a base station, a Node B, for example. Note that the functionality associated with this node may be carried out by a single physical node, or a combination of physical nodes. The "second node" in the following description is a node, e.g., another access node, with which the first node has no neighbor relation. The "third node," on the other hand is a node with which the first node already has a neighbor relation. "Neighbor relation" here refers to a node relation, i.e., where the first node is aware of one or more physical cell identifiers and/or unique identifiers specifically associated to the other node, or a beam relation, i.e., where the first node is aware of a beam identifier and/or unique identifier associated with a particular beam transmitted by the second node, or a combination of both. In the procedure illustrated in Figure 4, it is assumed that decisions as to which node or beam a UE should be handed over is made by the network, although the techniques described herein are not necessarily limited to such a scenario.

An identifier uniquely identifying a node is referred to here as a Node Global Identifier (NGID). In some systems, a node can transmit one or more mobility beams, where each of the mobility beams has a unique (globally) ID hereafter referred to as the Mobility Beam Global ID (MBGID). For example, a Mobility Beam Global ID MBGID=[NGID,MBID]] can consist of a first part defining the NGID and a second part defining the node local Mobility Beam ID (MBID). It will be appreciated that these identifiers may be referred to with other names. The MBGID is not likely to be transmitted as part of the mobility beam.

The identifier used in a Random Access Response for a node or beam, e.g., as shown in step 2 of Figure 2, is hereafter referred to as the Random Access Response ID (RARID). In the embodiments listed below, the RARID can either take the value of NGID or MBGID. These approaches are separately described, as techniques 1 and 2 below.

The core of the technique for establishing the neighbor relation with an unknown node includes steps 1-2, 7-8, and 11-13 of signal flow graph shown in Figure 4. These steps are explained below.
Step 1. The first node requests from known neighboring nodes (third node), the RARID used in step 2 of the random access procedure shown in Figure 2. It should be noted that this step may also be done as late as after step 7, but before step 8 below.
Step 2. Known neighboring nodes, including a third node, respond with the RARID used in step 2 in the random access procedure. Again, this step may be performed as late as after step 7, but before step 8 below.
Step 3. A condition to initiate mobility procedure is fulfilled. Details of the mobility procedures and actions are not provided, as they are not necessary for the purposes of understanding the presently disclosed techniques for establishing neighbor relations. The criteria for initiating mobility procedures may be similar to those specified in existing standards for LTE, for example. It could be the UE initiating the mobility action or the network initiating the mobility action, in various embodiments.
Step 4. The first node requests known neighbors (third node) to activate mobility reference signals (MRSs). This also involves a coordination procedure, where the first node will be aware of the MRSs transmitted by the third node, for example. Again, details of the mobility procedure and action are not provided here, since they are not necessary to the understanding of the core techniques for establishing neighbor relations.
Step 5. The UE (wireless device) detects and measures the MRSs transmitted by surrounding nodes, and obtains a MRS identifier for each MRS. This MRS identifier may be an indicator of the time-frequency resources occupied by the MRS, for example, or an indicator of a particular sequence included in the MRS, or an explicit identifier carried by the MRS, or some combination thereof. Note that the MRS transmission from the unknown node (the second node) is not requested by the first node, as the first node has no relation with this node, but a transmission that is happening because of some other reason. Note that in this configuration mode the UE is configured to detect and report the MRSs from all detected MRSs, e.g., within a given MRS range, rather than being configured to search for particular MRSs.
Step 6. The UE reports detected MRS identifiers to first node, potentially also including signal strength measurements
Step 7. First node detects that UE has reported an MRS identifier which is unknown to the first node (using information obtained from step 4), in the sense that the first node does not know which other node transmitted the MRS. In some embodiments, the first node may also check whether the reported signal strength of MRS is above a certain threshold, and only perform the following steps in the event that the signal strength for this MRS is above the threshold.
Step 8. The first node configures a RARID blacklist in the UE, where the RARID blacklist {RARID1, RARID2, RARID3, ...} includes all RARIDs of known neighboring nodes (third node) collected in step 2 above. The first node then requests UE to perform random access. Note that these operations may be performed separately in some embodiments, e.g., with the configuring of the RARID blacklist occurring considerably earlier.
Step 9. The UE sends a random access preamble to initiate random access. In some embodiments, this random access preamble may be a random access preamble that is specifically reserved for the purpose of establishing neighbor relations between nodes, or chosen from a group of random access preambles set aside for this purpose.
Step 10. All nodes that detect the preamble transmitted in step 9 send random access response to the UE including their RARID. In some embodiments, nodes may be configured to include the RARID in the random access response message only if the detected preamble is known to the node to be reserved for the procedure of establishing neighbor relations between nodes.
Step 11. The UE establishes a connection to a node having a RARID not in the RARID blacklist, i.e., a second node. In some embodiments, the UE may include a flag in in the connection establishment step in order to inform that UE has information about relation establishment of new neighbor. In some embodiments, the UE may be configured so that it only connects to the node in the event that the signal strength of random access response (step 10) is above certain threshold.
Step 12. The UE reports NGID of first node and/or information about the mobility beam the UE was located in in the first node, referred to as mobility beam information such as MBGID.
Step 13. The second node establishes neighbor relation and connection with first node using the first node's NGID the UE reported in step 12. This may be done, for example, by establishing a connection directly with the first node, using the reported NGID. In other embodiments, this may be done by retrieving contact information for the first node from a core network node, using the reported NGID, and then establishing a connection directly with the first node. In still other embodiments, this may be done by forwarding the reported NGID to a core network node, which then contacts the first node to set up the new neighbor relation.

Additional details for two variants of the technique generally illustrated in Figure 4 and described above are provided below. A first variant, referred to below as "Technique 1," is focused on the establishing of node-based neighbor relations, while a second variant, referred to below as "Technique 2," is focused on the establishing mobility-beam-based neighbor relations. It will be appreciated that both are variations of the same general technique, and that some embodiments may involve both variations. While the details provided below use the specific terminology introduced above, it will be appreciated that different terminology for similar parameters may be used.

Technique 1 - the focus of this variant is to establish node neighbor relations. In this case:
- RARID is set to NGID;
- In step 2, the third node responds with the NGID of the third node;
- In step 8, the first node configures the RARID blacklist based on existing known neighboring node relations;
- In step 8, the first node does not configure mobility beam information (e.g., MBGID);
- In step 10, the RARID is set to the NGID of the node;
- In step 12, the UE does not report mobility beam information (e.g., MBGID) for the first node.

Note that the configuration of the RARID blacklist may be performed at an earlier stage than shown in Figure 4, i.e., after step 2 but before step 8.

Technique 2 - the focus of this variant is to establish mobility beam neighbor relations. In this case:
- RARID is set to the MBGID of the corresponding mobility beam;
- In step 2, the third node responds with RARID = MBGID of the third node mobility beam(s);
- In step 8, the first node generates the RARID blacklist based on known neighboring beam relations, i.e., the blacklist will contain MBGIDs for mobility beams known to the first node, according to its existing mobility beam neighbor relations;
- In step 8, the first node configures the UE with mobility beam information of first node, which can be the MBGID (the MBGID may be generally unknown to the UE, in which case this explicit configuration step is needed);
- In step 10, the RARID is set to the MBGID of the mobility beam transmitted to the UE.

When a third node receives the preamble in transmitted in step 9, third node will map received signal to a mobility beam and set RARID to MBGID, based on this mobility beam.
- In step 12, the UE reports first node mobility beam information, e.g., the MBGID provided to it by the first node.
- In step 13, the neighbor relation comprises information sufficient to establish beam relations, e.g., first node and second node mobility beam identifiers.

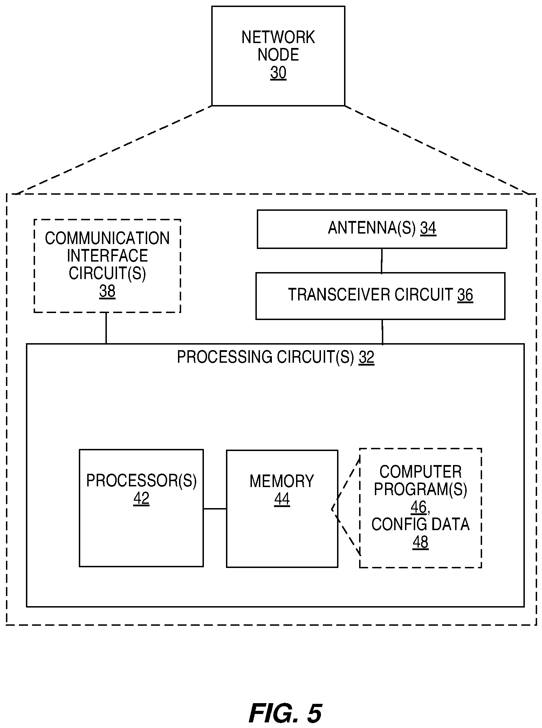

Figure 5 illustrates a diagram of a node, such as network node 30, configured to carry out the operations described above for a first node or a second node, according to some embodiments. The network node 30 may be, for example, a network access node such as a base station or eNodeB. The network node 30 provides an air interface to a wireless device, e.g., an LTE or 5G air interface or WLAN air interface for downlink transmission and uplink reception, which is implemented via antennas 34 and a transceiver circuit 36. The transceiver circuit 36 may include transmitter circuits, receiver circuits, and associated control circuits that are collectively configured to transmit and receive signals according to a radio access technology, for the purposes of providing cellular communication, or WLAN services if necessary. According to various embodiments, cellular communication services may be operated according to any one or more of the 3GPP cellular standards, GSM, GPRS, WCDMA, HSDPA, LTE, LTE-Advanced and 5G. The network node 30 may also include communication interface circuits 38 for communicating with nodes in the core network, other peer radio nodes, and/or other types of nodes in the network.

The network node 30 also includes one or more processing circuits 32 that are operatively associated with and configured to control the communication interface circuit(s) 38 and/or the transceiver circuit 36. The processing circuit 32 comprises one or more digital processors 42, e.g., one or more microprocessors, microcontrollers, Digital Signal Processors (DSPs), Field Programmable Gate Arrays (FPGAs), Complex Programmable Logic Devices (CPLDs), Application Specific Integrated Circuits (ASICs), or any combination thereof. More generally, the processing circuit 32 may comprise fixed circuitry, or programmable circuitry that is specially configured via the execution of program instructions implementing the functionality taught herein, or may comprise some combination of fixed and programmable circuitry. The processor(s) 42 may be multi-core.

The processing circuit 32 also includes a memory 44. The memory 44, in some embodiments, stores one or more computer programs 46 and, optionally, configuration data 48. The memory 44 provides non-transitory storage for the computer program 46 and it may comprise one or more types of computer-readable media, such as disk storage, solid-state memory storage, or any combination thereof. By way of non-limiting example, the memory 44 may comprise any one or more of SRAM, DRAM, EEPROM, and FLASH memory, which may be in the processing circuit 32 and/or separate from the processing circuit 32. In general, the memory 44 comprises one or more types of computer-readable storage media providing non-transitory storage of the computer program 46 and any configuration data 48 used by the node 30. Here, "non-transitory" means permanent, semi-permanent, or at least temporarily persistent storage and encompasses both long-term storage in non-volatile memory and storage in working memory, e.g., for program execution.

In some embodiments, the network node 30 is configured to operate as a first node 30 (e.g., serving access node). Accordingly, in some embodiments, the processing circuit 32 of the first node 30 is configured to receive, from a wireless device served by the first node 30, one or more indications of received mobility reference signals and determine that one of the one or more indications corresponds to a mobility reference signal associated with a node or beam that is unknown to the first node 30. The processing circuit 32 is also configured to send, to the wireless device, a blacklist comprising one or more random access response identifiers and send, to the wireless device, a request to perform random access, in response to said determining. The processing circuit 32 is configured to receive, from a second node of the wireless communication network, after sending the request to perform random access, neighbor relation information for the second node and/or for a beam transmitted by the second node, where the second node and/or the beam is associated with the mobility reference signal corresponding to said one of the one or more indications.

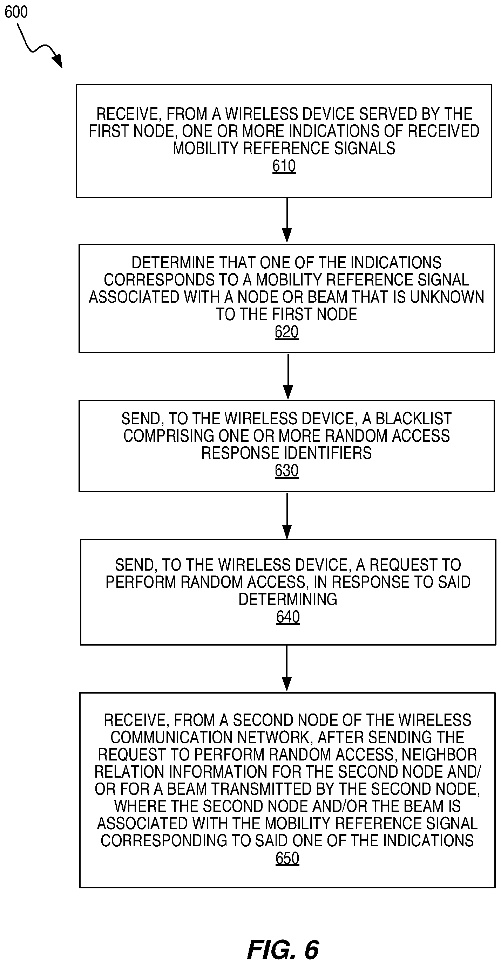

Regardless of its specific implementation details, the processing circuit 32 of the first node 30 is configured to perform a method according to one or more of the techniques described above, such as method 600 of Figure 6. The method 600 includes receiving, from a wireless device served by the first node 30, one or more indications of received mobility reference signals (block 610) and determining that one of the one or more indications corresponds to a mobility reference signal associated with a node or beam that is unknown to the first node 30 (block 620). The method 600 also includes sending, to the wireless device, a blacklist comprising one or more random access response identifiers (block 630), sending, to the wireless device, a request to perform random access, in response to said determining (block 640) and receiving, from a second node of the wireless communication network, after sending the request to perform random access, neighbor relation information for the second node and/or for a beam transmitted by the second node (block 650). The second node and/or the beam is associated with the mobility reference signal corresponding to said one of the one or more indications.

The method 600 may include updating a neighbor list, using the received neighbor relation information. The random access response identifiers may each correspond to a respective node of the wireless communication network or a respective beam transmitted by another node of the wireless communication network.

In some embodiments, the method 600 includes, prior to said determining and prior to sending the blacklist to the wireless device, requesting random access response identifiers from each of one or more known neighbor nodes in the wireless communication network. The determining is based on random access response identifiers received in response to said requesting.

In other embodiments, the method 600 includes, prior to receiving the one or more indications of received mobility reference signals, requesting each of one or more known neighbor nodes to transmit respective mobility reference signals.

The network node 30 may also be configured to operate as a second node 30 (e.g., node unknown to the wireless device), according to some embodiments. The processing circuit 32 of the second node 30 is configured to receive, from a wireless device, a random access preamble and transmit a random access response in response to said receiving. The random access response includes a random access response identifier. The processing circuit 32 is also configured to receive a connection request from the wireless device, in response to transmitting the random access response, and establish a connection to the wireless device. The processing circuit 32 is configured to receive, from the wireless device, an identifier for a first node or an identifier for a beam transmitted by the first node, or both, and send, to the first node, neighbor relation information for the second node 30 and/or for a beam transmitted by the second node 30.

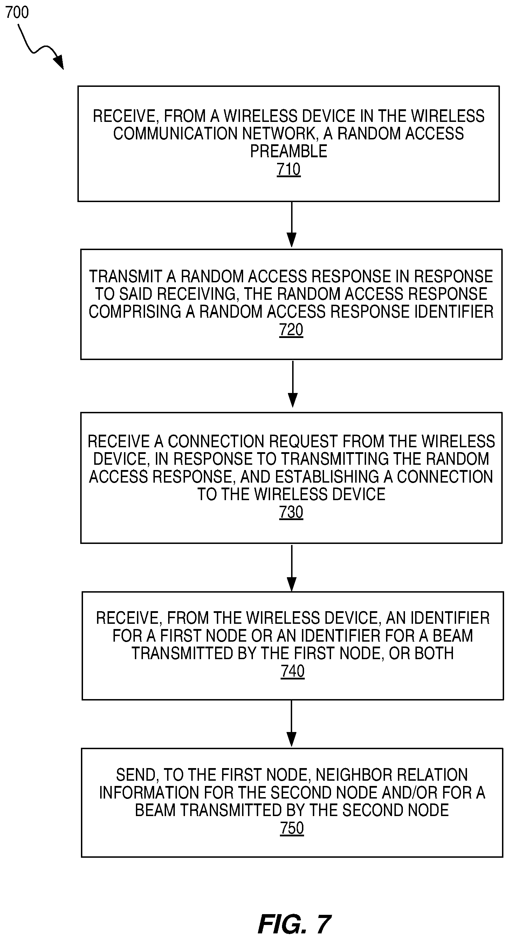

Regardless of its specific implementation details, the processing circuit 32 of the second node 30 is configured to perform a method according to one or more of the techniques described above, such as method 700 of Figure 7. The method 700 includes receiving, from a wireless device in the wireless communication network, a random access preamble (block 710) and transmitting a random access response in response to said receiving, the random access response comprising a random access response identifier (block 720). The method 700 also includes receiving a connection request from the wireless device, in response to transmitting the random access response, and establishing a connection to the wireless device (block 730). The method 700 further includes receiving, from the wireless device, an identifier for a first node or an identifier for a beam transmitted by the first node, or both (block 740) and sending, to the first node, neighbor relation information for the second node 30 and/or for a beam transmitted by the second node 30 (block 750).

In some cases, the method 700 also includes receiving, from the wireless device, a random access identifier corresponding to a third node and/or to a beam transmitted by the third node and sending, to the first node, the random access identifier corresponding to the third node and/or to the beam transmitted by the third node.

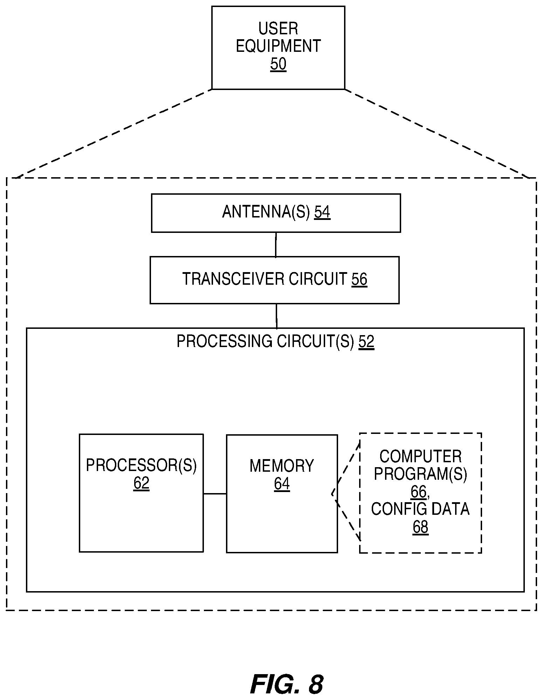

Figure 8 illustrates an example wireless device, referred to as user equipment (UE) 50 in Figure 8, that is configured to perform the techniques described herein for the wireless device. The UE 50 may also be considered to represent any wireless devices that may operate in a network. The UE 50 herein can be any type of wireless device capable of communicating with a network node or another UE over radio signals. The UE 50 may also be referred to, in various contexts, as a radio communication device, a target device, a device-to-device (D2D) UE, a machine-type UE or UE capable of machine to machine (M2M) communication, a sensor-equipped UE, a PDA (personal digital assistant), a wireless tablet, a mobile terminal, a smart phone, laptop-embedded equipment (LEE), laptop-mounted equipment (LME), a wireless USB dongle, a Customer Premises Equipment (CPE), etc.

The UE 50 communicates with one or more radio nodes or base stations, such as one or more network nodes 30, via antennas 54 and a transceiver circuit 56. The transceiver circuit 56 may include transmitter circuits, receiver circuits, and associated control circuits that are collectively configured to transmit and receive signals according to a radio access technology, for the purposes of providing cellular communication services.

The UE 50 also includes one or more processing circuits 52 that are operatively associated with and control the radio transceiver circuit 56. The processing circuit 52 comprises one or more digital processing circuits, e.g., one or more microprocessors, microcontrollers, DSPs, FPGAs, CPLDs, ASICs, or any mix thereof. More generally, the processing circuit 52 may comprise fixed circuitry, or programmable circuitry that is specially adapted via the execution of program instructions implementing the functionality taught herein, or may comprise some mix of fixed and programmed circuitry. The processing circuit 52 may be multi-core.

The processing circuit 52 also includes a memory 64. The memory 64, in some embodiments, stores one or more computer programs 66 and, optionally, configuration data 68. The memory 64 provides non-transitory storage for the computer program 66 and it may comprise one or more types of computer-readable media, such as disk storage, solid-state memory storage, or any mix thereof. By way of non-limiting example, the memory 64 comprises any one or more of SRAM, DRAM, EEPROM, and FLASH memory, which may be in the processing circuit 52 and/or separate from processing circuit 52. In general, the memory 64 comprises one or more types of computer-readable storage media providing non-transitory storage of the computer program 66 and any configuration data 68 used by the user equipment 50.

Accordingly, in some embodiments, the processing circuit 52 of the UE 50 is configured to receive, from a first node 30 (e.g., network node 30 serving the UE 50) in the wireless communication network, a blacklist comprising one or more random access response identifiers. The processing circuit 52 is also configured to transmit a random access preamble, to initiate random access to another node in the wireless communication network and receive a random access response, in response to the transmitted random access preamble. The processing circuit 52 is configured to compare a random access response identifier included in the received random access response to the one or more random access response identifiers in the blacklist and establish a connection to a second node in the wireless communication network, wherein the second node corresponds to the received random access response, responsive to determining that the random access response identifier included in the received random access response is not included in the blacklist. The processing circuit 52 is configured to send, to the second node, an identifier for the first node 30 or an identifier for a beam transmitted by the first node 30, or both.

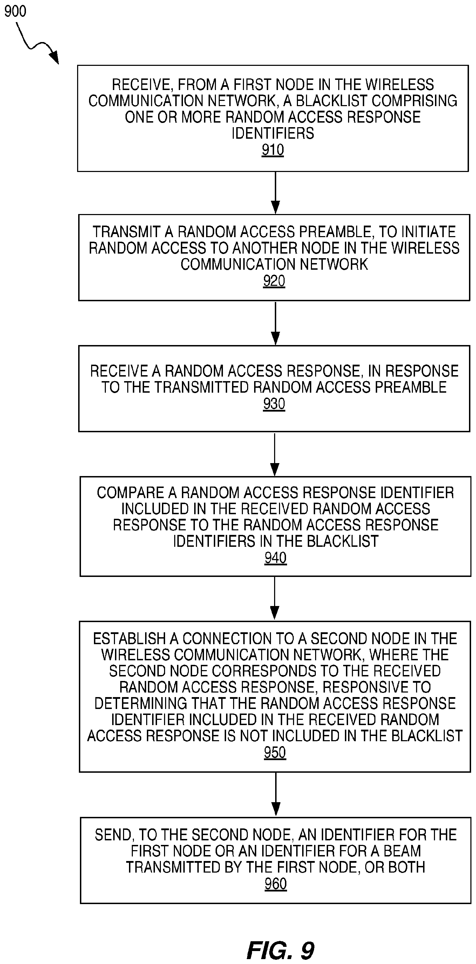

Regardless of its specific implementation details, the processing circuit 52 of the UE 50 is configured to perform a method according to one or more of the techniques described, such as method 900 of Figure 9. The method 900 includes receiving, from a first node 30 in the wireless communication network, a blacklist comprising one or more random access response identifiers (block 910) and transmitting a random access preamble, to initiate random access to another node in the wireless communication network (block 920). The method 900 includes receiving a random access response, in response to the transmitted random access preamble (block 930) and comparing a random access response identifier included in the received random access response to the one or more random access response identifiers in the blacklist (block 940). The method 900 also includes establishing a connection to a second node in the wireless communication network, wherein the second node corresponds to the received random access response, responsive to determining that the random access response identifier included in the received random access response is not included in the blacklist (block 950) and sending, to the second node, an identifier for the first node 30 or an identifier for a beam transmitted by the first node 30, or both (block 960).

The method 900 may further include reporting one or more indications of received mobility reference signals to the first node 30, prior to said transmitting the random access preamble. The transmitting the random access preamble is responsive to receiving, subsequent to said reporting, a request to perform random access. The one or more indications of received mobility reference signals may each comprise a sequence identifier for the respective mobility reference signal or an indicator of time-frequency resources occupied by the respective mobility reference signal, or both.

In some cases, the method 900 includes receiving a plurality of random access responses in response to the transmitted random access preamble, at least two of the random access responses comprising respective random access response identifiers that are not included in the blacklist. Establishing the connection to the second node then includes establishing the connection to a node corresponding to a first one of the at least two random access responses comprising random access response identifiers that are not included in the blacklist. The method 900 further includes sending, to the second node, an indication of the random access response identifier for at least a second one of the at least two random access responses comprising random access response identifiers that are not included in the blacklist. In some cases, this may mean that the UE 50 could be configured so that if it receives two random access responses (RARs) with identifiers that are not in the blacklist, the UE 50 connects to one of those nodes, reports the node/beam ID for the original serving node to the new serving node, and also reports the RAR identifier for the node/beam to which it did not connect. Then, the new serving node will identify itself to the original serving node, and also forward the other RAR identifier to the original serving node, so that the original serving node gets what it needs for both of the unknown nodes/beams.

As discussed in detail above, the techniques described herein, e.g., as illustrated in the process flow diagrams of Figures 6, 7 and 9, may be implemented, in whole or in part, using computer program instructions executed by one or more processors. It will be appreciated that a functional implementation of these techniques may be represented in terms of functional modules, where each functional module corresponds to a functional unit of software executing in an appropriate processor or to a functional digital hardware circuit, or some combination of both.

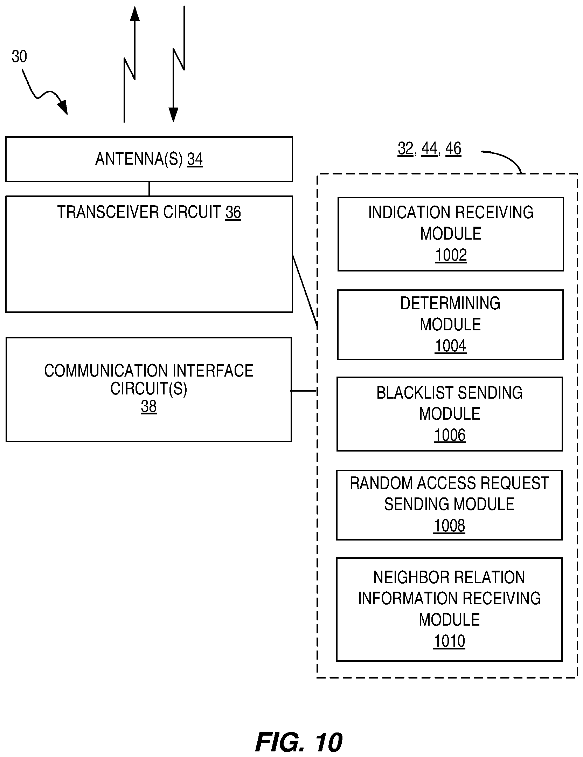

Figure 10 illustrates an example functional module or circuit architecture as may be implemented in a network node 30 operating as a first node. The implementation includes an indication receiving module 1002 for receiving, from a wireless device served by the first node, one or more indications of received mobility reference signals and a determining module 1004 for determining that one of the one or more indications corresponds to a mobility reference signal associated with a node or beam that is unknown to the first node. The implementation also includes a blacklist sending module 1006 for sending, to the wireless device, a blacklist comprising one or more random access response identifiers and a random access request sending module 1008 for sending, to the wireless device, a request to perform random access, in response to said determining. The implementation further includes a neighbor relation information receiving module 1010 for receiving, from a second node of the wireless communication network, after sending the request to perform random access, neighbor relation information for the second node and/or for a beam transmitted by the second node. The second node and/or the beam is associated with the mobility reference signal corresponding to said one of the one or more indications.

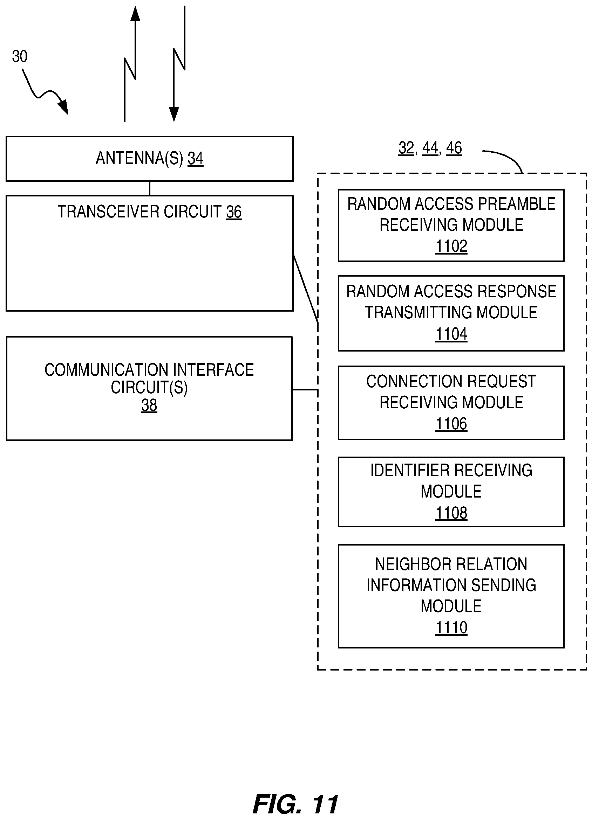

Figure 11 illustrates an example functional module or circuit architecture as may be implemented in a network node 30 operating as a second node. The implementation includes a random access preamble receiving module 1102 for receiving, from a wireless device in the wireless communication network, a random access preamble and a random access response transmitting module 1104 for transmitting a random access response in response to said receiving, the random access response comprising a random access response identifier. The implementation also includes a connection request receiving module 1106 for receiving a connection request from the wireless device, in response to transmitting the random access response, and establishing a connection to the wireless device. The implementation further includes an identifier receiving module 1108 for receiving, from the wireless device, an identifier for a first node or an identifier for a beam transmitted by the first node, or both, and a neighbor relation information sending module 1110 for sending, to the first node, neighbor relation information for the second node and/or for a beam transmitted by the second node.

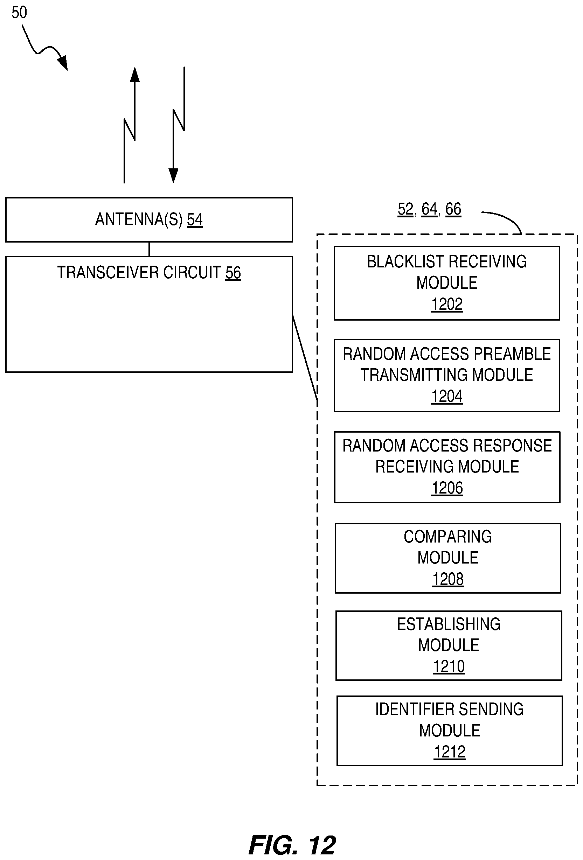

Figure 12 illustrates an example functional module or circuit architecture as may be implemented in a wireless device, such as UE 50. The implementation includes a blacklist receiving module 1202 for receiving, from a first node in the wireless communication network, a blacklist comprising one or more random access response identifiers and a random access preamble transmitting module 1204 for transmitting a random access preamble, to initiate random access to another node in the wireless communication network. The implementation also includes a random access response receiving module 1206 for receiving a random access response, in response to the transmitted random access preamble and a comparing module 1208 for comparing a random access response identifier included in the received random access response to the one or more random access response identifiers in the blacklist. The implementation further includes an establishing module 1210 for establishing a connection to a second node in the wireless communication network, wherein the second node corresponds to the received random access response, responsive to determining that the random access response identifier included in the received random access response is not included in the blacklist. The implementation also includes an identifier sending module 1212 for sending, to the second node, an identifier for the first node or an identifier for a beam transmitted by the first node, or both.

## Claims

1. A method (900), in a wireless device (50) operating in a wireless communication network, the method (900) comprising:
receiving (910), from a first node (30) serving the wireless device (50) in the wireless communication network, a blacklist comprising one or more random access response identifiers, wherein the one or more random access response identifiers are cell or beam identities that correspond to neighboring nodes that are known to the first node (30);
transmitting (920) a random access preamble, to initiate random access to another node in the wireless communication network;
receiving (930) a random access response, in response to the transmitted random access preamble, wherein the random access response comprises a random access response identifier that identifies a node sending the random access response;
comparing (940) the random access response identifier included in the received random access response to the one or more random access response identifiers in the blacklist;
establishing (950) a connection to a second node in the wireless communication network, wherein the second node corresponds to the received random access response, responsive to determining that the random access response identifier included in the received random access response is not included in the blacklist; and
sending (960), to the second node, an identifier for the first node (30) or an identifier for a beam transmitted by the first node, or both.

2. The method (900) of claim 1, wherein the method (900) further comprises reporting one or more indications of received mobility reference signals to the first node (30), prior to said transmitting (920) the random access preamble, and wherein said transmitting (920) the random access preamble is responsive to receiving, subsequent to said reporting, a request to perform random access.

3. The method (900) of claim 2, wherein the one or more indications of received mobility reference signals each comprise a sequence identifier for the respective mobility reference signal or an indicator of time-frequency resources occupied by the respective mobility reference signal, or both.

4. The method (900) of any of claims 1-3, wherein:
the method (900) comprises receiving a plurality of random access responses in response to the transmitted random access preamble, at least two of the random access responses comprising respective random access response identifiers that are not included in the blacklist;
wherein said establishing (950) the connection to the second node comprises establishing the connection to a node corresponding to a first one of the at least two random access responses comprising random access response identifiers that are not included in the blacklist; and
wherein the method (900) further comprises sending, to the second node, an indication of the random access response identifier for at least a second one of the at least two random access responses comprising random access response identifiers that are not included in the blacklist.

5. A wireless device (50) configured to operate in a wireless communication network, comprising:
a transceiver circuit (56) configured to communicate with one or more nodes (30) operating in the wireless communication network; and
a processing circuit (52) operatively associated with the transceiver circuit (56) and configured to:
receive, from a first node serving the wireless device (50) in the wireless communication network, a blacklist comprising one or more random access response identifiers, wherein the one or more random access response identifiers are cell or beam identities that correspond to neighboring nodes that are known to the first node;
transmit a random access preamble, to initiate random access to another node in the wireless communication network;
receive a random access response, in response to the transmitted random access preamble, wherein the random access response comprises a random access response identifier that identifies a node sending the random access response;
compare the random access response identifier included in the received random access response to the one or more random access response identifiers in the blacklist;
establish a connection to a second node in the wireless communication network, wherein the second node corresponds to the received random access response, responsive to determining that the random access response identifier included in the received random access response is not included in the blacklist; and
send, to the second node, an identifier for the first node or an identifier for a beam transmitted by the first node, or both.

6. A computer program (66), comprising instructions which, when executed on a processing circuit (52) of a wireless device, cause the processing circuit (52) to carry out the method (900) according to any one of claims 1 to 4.

7. A carrier containing the computer program (66) of claim 6, wherein the carrier is one of an electronic signal, optical signal, radio signal, or computer readable storage medium.

## Patentansprüche

1. Verfahren (900) in einer drahtlosen Vorrichtung (50), die in einem drahtlosen Kommunikationsnetz arbeitet, wobei das Verfahren (900) umfasst:
Empfangen (910), von einem der drahtlosen Vorrichtung (50) in dem drahtlosen Kommunikationsnetz dienenden ersten Knoten (30), einer Blacklist, die eine oder mehrere Direktzugriffsantwortkennungen umfasst, wobei die eine oder die mehreren Direktzugriffsantwortkennungen Zell- oder Strahlidentitäten sind, die benachbarten Knoten entsprechen, die dem ersten Knoten (30) bekannt sind;
Übertragen (920) eines Direktzugriffsoberbegriffs, um Direktzugriff zu einem anderen Knoten in dem drahtlosen Kommunikationsnetz zu initiieren;
Empfangen (930) einer Direktzugriffsantwort als Reaktion auf den übertragenen Direktzugriffsoberbegriff, wobei die Direktzugriffsantwort eine Direktzugriffsantwortkennung umfasst, die einen Knoten identifiziert, der die Direktzugriffsantwort sendet;
Vergleichen (940) der Direktzugriffsantwortkennung, die in der empfangenen Direktzugriffsantwort eingeschlossen ist, mit der einen oder den mehreren Direktzugriffsantwortkennungen in der Blacklist;
Einrichten (950) einer Verbindung zu einem zweiten Knoten in dem drahtlosen Kommunikationsnetz, wobei der zweite Knoten der empfangenen Direktzugriffsantwort entspricht, als Reaktion auf das Bestimmen, dass die in der empfangenen Direktzugriffsantwort eingeschlossene Direktzugriffsantwortkennung nicht in der Blacklist eingeschlossen ist; und
Senden (960), an den zweiten Knoten, einer Kennung für den ersten Knoten (30) oder einer Kennung für einen von dem ersten Knoten übertragenen Strahl oder beides.

2. Verfahren (900) nach Anspruch 1, wobei das Verfahren (900) ferner das Melden eines oder mehrerer Angaben von empfangenen Mobilitätsreferenzsignalen an den ersten Knoten (30) vor dem Übertragen (920) des Direktzugriffsoberbegriffs umfasst und wobei das Übertragen (920) des Direktzugriffsoberbegriffs eine Reaktion auf das Empfangen, nach dem Melden, einer Anforderung zum Durchführen des Direktzugriffs ist.

3. Verfahren (900) nach Anspruch 2, wobei die eine oder die mehreren Angaben von empfangenen Mobilitätsreferenzsignalen jeweils eine Sequenzkennung für das jeweilige Mobilitätsreferenzsignal oder einen Indikator von Zeit-Frequenz-Ressourcen, die von dem jeweiligen Mobilitätsreferenzsignal belegt sind, oder beides umfassen.

4. Verfahren (900) nach einem der Ansprüche 1-3, wobei:
das Verfahren (900) das Empfangen einer Vielzahl von Direktzugriffsantworten als Reaktion auf den übertragenen Direktzugriffsoberbegriff umfasst, wobei mindestens zwei der Direktzugriffsantworten jeweilige Direktzugriffsantwortkennungen umfassen, die nicht in der Blacklist eingeschlossen sind;
wobei das Einrichten (950) der Verbindung zu dem zweiten Knoten das Einrichten der Verbindung zu einem Knoten umfasst, der einer ersten der mindestens zwei Direktzugriffsantworten entspricht, die Direktzugriffsantwortkennungen umfassen, die nicht in der Blacklist eingeschlossen sind; und
wobei das Verfahren (900) ferner das Senden, an den zweiten Knoten, einer Angabe der Direktzugriffsantwortkennung für mindestens einen zweiten der mindestens zwei Direktzugriffsantworten umfasst, die Direktzugriffsantwortkennungen umfassen, die nicht in der Blacklist eingeschlossen sind.

5. Drahtlose Vorrichtung (50), die zum Betreiben in einem drahtlosen Kommunikationsnetz konfiguriert ist, umfassend:
eine Sender-Empfänger-Schaltung (56), die dazu konfiguriert ist, mit einem oder mehreren Knoten (30) zu kommunizieren, die in dem drahtlosen Kommunikationsnetz betrieben werden; und
eine Verarbeitungsschaltung (52), die der Sender-Empfänger-Schaltung (56) operativ zugeordnet und konfiguriert ist zum:
Empfangen, von einem der drahtlosen Vorrichtung (50) in dem drahtlosen Kommunikationsnetz dienenden ersten Knoten, einer Blacklist, die eine oder mehrere Direktzugriffsantwortkennungen umfasst, wobei die eine oder die mehreren Direktzugriffsantwortkennungen Zell- oder Strahlidentitäten sind, die benachbarten Knoten entsprechen, die dem ersten Knoten bekannt sind;
Übertragen eines Direktzugriffsoberbegriffs, um Direktzugriff zu einem anderen Knoten in dem drahtlosen Kommunikationsnetz zu initiieren;
Empfangen einer Direktzugriffsantwort als Reaktion auf den übertragenen Direktzugriffsoberbegriff, wobei die Direktzugriffsantwort eine Direktzugriffsantwortkennung umfasst, die einen Knoten identifiziert, der die Direktzugriffsantwort sendet;
Vergleichen der Direktzugriffsantwortkennung, die in der empfangenen Direktzugriffsantwort eingeschlossen ist, mit der einen oder den mehreren Direktzugriffsantwortkennungen in der Blacklist;
Einrichten einer Verbindung zu einem zweiten Knoten in dem drahtlosen Kommunikationsnetz, wobei der zweite Knoten der empfangenen Direktzugriffsantwort entspricht, als Reaktion auf das Bestimmen, dass die in der empfangenen Direktzugriffsantwort eingeschlossene Direktzugriffsantwortkennung nicht in der Blacklist eingeschlossen ist; und
Senden, an den zweiten Knoten, einer Kennung für den ersten Knoten oder einer Kennung für einen von dem ersten Knoten übertragenen Strahl oder beides.

6. Computerprogramm (66), umfassend Anweisungen, die bei Ausführung auf einer Verarbeitungsschaltung (52) einer drahtlosen Vorrichtung die Verarbeitungsschaltung (52) veranlassen, das Verfahren (900) nach einem der Ansprüche 1 bis 4 auszuführen.

7. Träger, der das Computerprogramm (66) nach Anspruch 6 enthält, wobei der Träger eines von einem elektronischen Signal, einem optischen Signal, einem Funksignal oder einem computerlesbaren Speichermedium ist.

## Revendications

1. Procédé (900), dans un dispositif sans fil (50) fonctionnant dans un réseau de communication sans fil, le procédé (900) comprenant :
la réception (910), depuis un premier nœud (30) desservant le dispositif sans fil (50) dans le réseau de communication sans fil, d'une liste noire comprenant un ou plusieurs identificateurs de réponse d'accès aléatoire, dans lequel le ou les identificateurs de réponse d'accès aléatoire sont des identités de cellule ou de faisceau qui correspondent à des nœuds voisins qui sont connus du premier nœud (30) ;
la transmission (920) d'un préambule d'accès aléatoire, pour déclencher un accès aléatoire vers un autre nœud dans le réseau de communication sans fil ;
la réception (930) d'une réponse d'accès aléatoire, en réponse au préambule d'accès aléatoire transmis, dans lequel la réponse d'accès aléatoire comprend un identificateur de réponse d'accès aléatoire qui identifie un nœud envoyant la réponse d'accès aléatoire ;
la comparaison (940) de l'identificateur de réponse d'accès aléatoire inclus dans la réponse d'accès aléatoire reçue à l'identificateur ou aux identificateurs de réponse d'accès aléatoire dans la liste noire ;
l'établissement (950) d'une connexion vers un deuxième nœud dans le réseau de communication sans fil, dans lequel le deuxième nœud correspond à la réponse d'accès aléatoire reçue, en réponse à la détermination que l'identificateur de réponse d'accès aléatoire inclus dans la réponse d'accès aléatoire reçue n'est pas inclus dans la liste noire ; et
l'envoi (960), au deuxième nœud, d'un identificateur pour le premier nœud (30) ou d'un identificateur pour un faisceau transmis par le premier nœud, ou de l'un et l'autre.

2. Procédé (900) selon la revendication 1, dans lequel le procédé (900) comprend en outre l'établissement d'un rapport d'une ou plusieurs indications de signaux de référence de mobilité reçus au premier nœud (30), avant ladite transmission (920) du préambule d'accès aléatoire, et dans lequel ladite transmission (920) du préambule d'accès aléatoire est en réponse à la réception, à la suite dudit établissement d'un rapport, d'une demande pour mettre en œuvre un accès aléatoire.

3. Procédé (900) selon la revendication 2, dans lequel la ou les indications de signaux de référence de mobilité reçus comprennent chacune un identificateur de séquence pour le signal de référence de mobilité respectif ou un indicateur de ressources temps-fréquence occupées par le signal de référence de mobilité respectif, ou l'un et l'autre.

4. Procédé (900) selon l'une quelconque des revendications 1 à 3, dans lequel :
le procédé (900) comprend la réception d'une pluralité de réponses d'accès aléatoire en réponse au préambule d'accès aléatoire transmis, au moins deux des réponses d'accès aléatoire comprenant des identificateurs de réponse d'accès aléatoire respectifs qui ne sont pas inclus dans la liste noire ;
dans lequel ledit établissement (950) de la connexion vers le deuxième nœud comprend l'établissement de la connexion vers un nœud correspondant à une première des au moins deux réponses d'accès aléatoire comprenant des identificateurs de réponse d'accès aléatoire qui ne sont pas inclus dans la liste noire ; et
dans lequel le procédé (900) comprend en outre l'envoi, au deuxième nœud, d'une indication de l'identificateur de réponse d'accès aléatoire pour au moins une deuxième des au moins deux réponses d'accès aléatoire comprenant des identificateurs de réponse d'accès aléatoire qui ne sont pas inclus dans la liste noire.

5. Dispositif sans fil (50) configuré pour fonctionner dans un réseau de communication sans fil, comprenant :
un circuit émetteur-récepteur (56) configuré pour communiquer avec un ou plusieurs nœuds (30) fonctionnant dans le réseau de communication sans fil ; et
un circuit de traitement (52) opérationnellement associé au circuit émetteur-récepteur (56) et configuré pour :
recevoir, depuis un premier nœud desservant le dispositif sans fil (50) dans le réseau de communication sans fil, une liste noire comprenant un ou plusieurs identificateurs de réponse d'accès aléatoire, dans lequel le ou les identificateurs de réponse d'accès aléatoire sont des identités de cellule ou de faisceau qui correspondent à des nœuds voisins qui sont connus du premier nœud ;
transmettre un préambule d'accès aléatoire, pour déclencher un accès aléatoire vers un autre nœud dans le réseau de communication sans fil ;
recevoir une réponse d'accès aléatoire, en réponse au préambule d'accès aléatoire transmis, dans lequel la réponse d'accès aléatoire comprend un identificateur de réponse d'accès aléatoire qui identifie un nœud envoyant la réponse d'accès aléatoire ;
comparer l'identificateur de réponse d'accès aléatoire inclus dans la réponse d'accès aléatoire reçue à l'identificateur ou aux identificateurs de réponse d'accès aléatoire dans la liste noire ;
établir une connexion vers un deuxième nœud dans le réseau de communication sans fil, dans lequel le deuxième nœud correspond à la réponse d'accès aléatoire reçue, en réponse à la détermination que l'identificateur de réponse d'accès aléatoire inclus dans la réponse d'accès aléatoire reçue n'est pas inclus dans la liste noire ; et
envoyer, au deuxième nœud, un identificateur pour le premier nœud ou un identificateur pour un faisceau transmis par le premier nœud, ou l'un et l'autre.

6. Programme informatique (66), comprenant des instructions qui, lorsqu'elles sont exécutées sur un circuit de traitement (52) d'un dispositif sans fil, amènent le circuit de traitement (52) à effectuer le procédé (900) selon l'une quelconque des revendications 1 à 4.

7. Porteuse contenant le programme informatique (66) selon la revendication 6, dans lequel la porteuse est l'un parmi un signal électronique, un signal optique, un signal radio, ou un support de stockage lisible par ordinateur.
